(19) Europäisches Patentamt
European Patent Office
Office européen des brevets

(11) Veröffentlichungsnummer: **0 243 834 B1**

# (12) EUROPÄISCHE PATENTSCHRIFT

(45) Veröffentlichungstag der Patentschrift: **02.05.91**

(51) Int. Cl.5: **C07C 251/60**, A01N 35/10

(21) Anmeldenummer: **87105761.8**

(22) Anmeldetag: **18.04.87**

## (54) Substituierte Oximether, ihre Verwendung als Bioregulatoren zur Senkung des endogenen Ethylenspiegels in Pflanzen.

(30) Priorität: **23.04.86 DE 3613649**

(43) Veröffentlichungstag der Anmeldung:
**04.11.87 Patentblatt 87/45**

(45) Bekanntmachung des Hinweises auf die Patenterteilung:
**02.05.91 Patentblatt 91/18**

(84) Benannte Vertragsstaaten:
**AT BE CH DE ES FR GB IT LI NL SE**

(56) Entgegenhaltungen:
**US-A- 3 115 518**

(73) Patentinhaber: **BASF Aktiengesellschaft**
**Carl-Bosch-Strasse 38**
**W-6700 Ludwigshafen(DE)**

(72) Erfinder: **Schulz, Guenter, Dr.**
**Carl Bosch-Str. 96**
**W-6700 Ludwigshafen(DE)**
Erfinder: **Will, Wolfgang, Dr.**
**Im Buegen 12**
**W-6719 Kirchheim(DE)**
Erfinder: **Jung, Johann, Prof.Dr.**
**Hardenburgstr. 19**
**W-6703 Limburgerhof(DE)**
Erfinder: **Fritsch, Hansjoerg, Dr.**
**Muehlweg 16**
**W-6703 Limburgerhof(DE)**

**EP 0 243 834 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue substituierte Oximether und ihre Verwendung als Bioregulatoren, insbesondere zur Senkung des endogenen Ethylenspiegels in Pflanzen.

In grünen Pflanzen natürlicherweise gebildetes oder von außen einwirkendes Ethylen wirkt als Pflanzenhormon, das Seneszenz (Alterungs-)vorgänge in Pflanzen steuert. Die Senkung des endogenen Ethylenspiegels führt in der Regel zur Verzögerung der Seneszenz. Die Ausnutzung dieses Effektes kann auf verschiedene Weise erfolgen: als Beispiele seien die Verlängerung der Lebensdauer von Schnittblumen, die Verminderung der Fruchtabszission und die Verlängerung der reproduktiven Phase von Pflanzen zur Steigerung des Ernteertrages genannt.

Bisher gelingt die Senkung des endogenen Ethylenspiegels praktisch nur im Versuchsmaßstab; der technischen Anwendung stehen verschiedene Hindernisse im Wege: zum Beispiel die aufwendige Herstellung und die Humantoxizität im Falle des Aminoethoxyvinylglycins, die Phytotoxizität und die unspezifische Wirkung im Falle der Aminooxyessigsäure oder die Umweltbelastung im Falle von $Co^{++}$-Ionen.Eine zusammenfassende Darstellung gibt Ann. Rev. Plant Physiol. 1984 S. 155 bis 189.

Es wurde nun gefunden, daß Wirkstoffe, die man als substituierte Oximether bezeichnen kann und die allgemeine Formel Ia bzw. Ib haben,

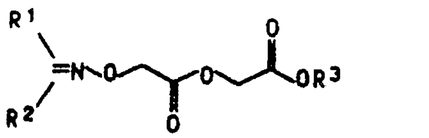

(Ia)

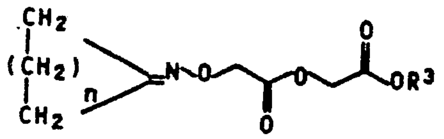

(Ib)

in der

$R^1$ und $R^2$ unabhängig voneinander für $C_1$ bis $C_6$ Alkyl stehen bzw. n die Zahl 2 oder 3 bedeutet und $R^3$ für Wasserstoff oder $C_1$ bis $C_6$-Alkyl steht, bioregulierend im oben genannten Sinne wirken, sich daneben durch eine gute Pflanzenverträglichkeit auszeichnen und auf einfache Art und Weise hergestellt werden können. Außerdem sind die erfindungsgemäßen Wirkstoffe vielfach wasserlöslich oder doch in vielen Fällen leichtlöslich, so daß ihre Formulierung leicht ist. Angaben zur Formulierung können beispielsweise dem Buch von R. Cremlyn, Pesticides (1987), S. 14-18 entnommen werden.

Eines von mehreren in Frage kommenden Herstellungsverfahren ist das folgende:
Man geht aus von einer entsprechenden Carbonsäure der Formel IIa bzw. IIb

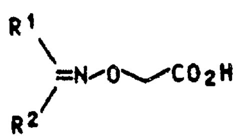

(IIa),

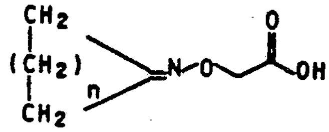

(IIb)

und verestert diese mit einem entsprechenden Carbonsäurederivat der Formel III

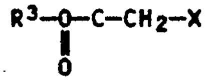
(III),

in der
X für einen geeigneten reaktiven Rest wie $I^-$, $Br^-$, $Cl^-$, Mesylat oder Tosylat steht. Als reaktiver Rest ("Abgangsgruppe") wird aus wirtschaftlichen Gründen i.a. das Chlorid oder das Bromid verwendet. Die Esterbildung wird wie üblich in Gegenwart eines Säurebindemittels wie Alkali- bzw. Erdalkalicarbonat, insbesondere Natriumcarbonat, oder Alkali- bzw. Erdalkalihydroxid, insbesondere Natriumhydroxid oder einer Aminbase wie Triethylamin ohne Lösungsmittel oder im aprotisch dipolaren Lösungsmittel wie Dimethylformamid oder N-Methylpyrrolidon durchgeführt. Die benötigten Vorprodukte II bzw. III sind meist handelsübliche Stoffe, jedenfalls aber beschrieben und mindestens mit den üblichen Mitteln des Fachmannes leicht erhältlich.

Je nach Art der Substituenten $R^1$ und $R^2$ können die Vorprodukte der Formel II und/oder die erfindugsgemäßen Wirkstoffe als E/Z-Isomere auftreten, die i.a. unterschiedlich bzw. unterschiedlich stark wirksam sind.

$R^1$ und $R^2$ können gleiche oder verschiedene Substituenten sein und, falls es sich um Alkyl handelt, n-Alkyl oder verzweigtes Alkyl sein; $R^1$ und $R^2$ können ersichtlich gemeinsam eine Methylenkette mit 4 oder 5 Gliedern darstellen; in diesem Falle ergibt sich die der Deutlichkeit halber herausgestellte Formel Ib.

$R^3$ kann ebenfalls Alkyl sein.

Für den Fachmann ergeben sich aus der allgemeinen Formel I bzw. Ia noch andere Herstellverfahren, die nach den vorhandenen Vorprodukten gewählt werden können und i.a. vergleichbare Ergebnisse liefern. Dies ergibt sich ohne weiteres aus folgenden Umsetzungsgleichungen:

(A) 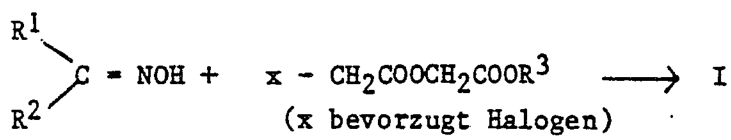


(B) 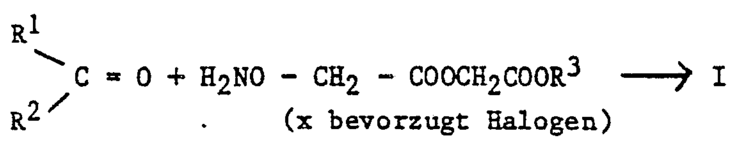


(C) 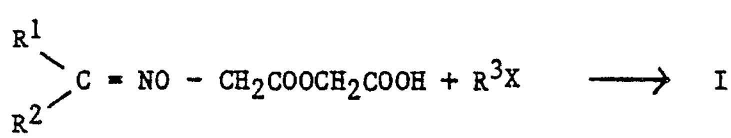

Wie man sieht, lassen die denkbaren Molekülbausteine eine Vielzahl von Umsetzungsmustern zu.

Die Herstellung der erfindungsgemäßen Wirkstoffe ergibt sich insbesondere aus folgendem Herstellungsbeispiel:

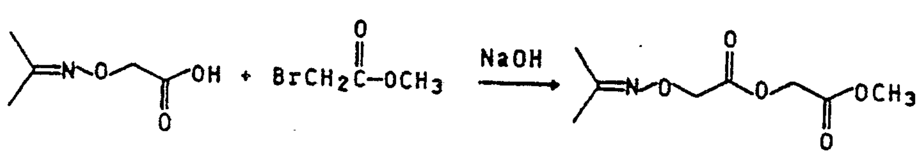


A B Beispiel 1

131 g der Carbonsäure A und 140 ml Triethylamin werden in 500 ml DMF 30 Min. bei 20 °C gerührt. Man tropft langsam 153 g Bromessigsäuremethylester(B) zu und rührt ca. 4 h bei 20 °C und 4 h bei 80 °C.

DMF wird unter vermindertem Druck (Wasserstrahlpumpe) entfernt; man verteilt zwischen Methylenchlorid und Wasser, wäscht mit 1 N HCl, wäßriger $NaHCO_3$-Lösung, Wasser und trocknet über $Na_2SO_4$. Destillation liefert 152 g der Verbindung 1, Kp 0,2 mbar: 75 - 80° C. $^1$H-NMR ($CDCl_3$, in ppm); 1.85 s 3H, 1.90 s 3H, 3.75 s 3H, 4.70 s 4H.

Die folgende Tabelle enthält weitere, auf die gleiche Art und Weise hergestellte Verbindungen; von den nicht mit physikalischen Angaben versehenen Verbindungen ist anzunehmen, daß sie auf die gleiche Art und Weise erhalten werden können bzw. wirken.

Tabelle I

| Beispiel-Nr. | $R^1$ | $R^2$ | $R^3$ | Fp. °C | Charakteristische spektroskopische Daten $^1$H-NMR (ppm) oder IR |
|---|---|---|---|---|---|
| 2 | $-CH_3$ | $-CH_3$ | $-C_2H_5$ | | |
| 3 | $-CH_3$ | $-CH_3$ | $-C_3H_7$ | | |
| 4 | $-CH_3$ | $-CH_3$ | $-CH(CH_3)_2$ | Öl | 1.3 d 6H, 1.88 s 3H, 1.95 s 3H, 4.70 s 2H, 4.75 s 2H, 5.15 h 1H |
| 5 | $-CH_3$ | $-CH_3$ | $-C(CH_3)_3$ | Öl | 1.49 s 9H, 1.86 s 3H, 1.92 s 3H, 4.58 s 2H, 4.68 s 2H |
| 6 | $-CH_3$ | $-CH_3$ | $-(CH_2)_5CH_3$ | Öl | 0.90 t 3H, 1.30 m 6H, 1.65 m 2H, 1.88 s 3H, 1.92 s 3H, 4.18 t 2H, 4.70 s 4H |
| 7 | $-CH_3$ | $-C_2H_5$ | $-CH_3$ | | |
| 8 | $-CH_3$ | $-C_2H_5$ | $-C_2H_5$ | | |
| 9 | $-CH_3$ | $-C_2H_5$ | $-C_3H_7$ | | |
| 10 | $-CH_3$ | $-C_2H_5$ | $-CH(CH_3)_2$ | Öl | 1.05 t 3H, 1.25 d 6H, 1.90 s 3H, 2.18 q 2H, 4.62 s 2H, 4.70 s 2H, 5.10 h 1H |
| 11 | $-CH_3$ | $-C_2H_5$ | $-C(CH_3)_3$ | Öl | 1.05 t 3H, 1.50 s 9H, 1.92 s 3H, 2.18 q 2H, 4.58 s 2H, 4.70 s 2H |
| 12 | $-CH_3$ | $-C_2H_5$ | $-(CH_2)_5CH_3$ | Öl | 0.9 t 3H, 1.1 t 3H, 1.3 m 6H, 1.65 m 2H, 1.93 s 3H, 2,2 q 2H, 4.18 t 2H, 4.68 s 2H, 4.70 s 2H |

Tabelle I

| Beispiel-Nr. | $R^1$ | $R^2$ | $R^3$ | Fp. °C | Charakteristische spektroskopische Daten $^1H$-NMR (ppm) oder IR |
|---|---|---|---|---|---|
| 13 | | $-(CH_2)_5-$ | $-CH_3$ | | |
| 14 | | $-(CH_2)_5-$ | $-C_2H_5$ | | |
| 15 | | $-(CH\ )_5-$ | $-C_3H_7$ | | |
| 16 | | $-(CH_2)_5-$ | $-CH(CH_3)_2$ | | 1.30 d 6H, 1.65 m 6H, 2.2 m 2H, 2.55 m 2H, 4.65 s 2H, 4.70 s 2H, 5.1 h 1H |
| 17 | | $-(CH_2)_5-$ | $-C(CH_3)_3$ | | 0.95 t 3H, (1,3 m + 1.6 m) 14 H, 2.2 m 2H, 2.5 m 2H, 4.2 t 2H, 4.7 s 4H |
| 18 | | $-(CH_2)_5-$ | $-(CH_2)_5CH_3$ | | 1.5 s 9H, 1.6 m 6H, 2.2 m 2H, 2.55 m 2H, 4.6 s 2H, 4.7 s 2H |

Anwendungsbeispiele

1. Hemmung der Ethylensynthese bei Soja-Blattstückchen

Soja-Blattstückchen wurden mit den Wirkstoffen gemäß Anspruch für 18 h inkubiert, dann in ein mit einem Gummiseptum gasdicht verschließbares Gefäß überführt und weitere 4 h inkubiert. Die gebildete Ethylenmenge wurde gaschromatographaisch erfaßt. Die Hemmwirkung einiger typischer Vertreter ist in Tab. II aufgeführt.

**Tab. II**

| Wirkstoff | % Hemmung |
|---|---|
| $H_2O$ | 0 |
| Aminooxyessigsäure | 85 |
| 1 | 85 |
| 5 | 91 |
| 16 | 89 |
| 17 | 93 |

2. Welketest bei Schnittblumen (Nelken)

Voll aufgeblühte Nelken wurden abgeschnitten und in Wirkstofflösung eingestellt. Der Verlauf des Welkevorgangs wurde über zwei Wochen verfolgt. Tab. III zeigt den prozentualen Anteil der nach 12 Tagen noch frisch erscheinenden Blüten.

**Tab. III**

| Wirkstoff | % frische Blüten nach 12 Tagen |
|---|---|
| $H_2O$ | 0 |
| $Ag^+$ | 100 |
| 1 | 100 |

Wie die Beispiele zeigen, sind die Wirkstoffe gemäß Anspruch in der Lage, die Ethylenproduktion im Gewebe stark zu drosseln und bestimmte, ethylenabhängige Prozesse in der Pflanze, wie zum Beispiel die Blütenwelke, zu hemmen. Die eingesetzten Wirkstoffe sind leichter zugänglich und/oder weniger toxisch als die bekannten Standards Aminooxyessigsäure und Silbersalze.

Anwendungsbeispiele

1. Hemmung der Ethylensynthese bei Soja-Blattstückchen

Blattstückchen von Blättern 4 - 5 Wochen alter Sojapflanzen wurden mit den Wirkstoffen, gelöst in Wasser, Aceton oder einer Mischung von Cyclohexanon und gebräuchlichen Emulgatoren wie z.B. Ricinusölethoxylat oder Calciumdodecylbenzosulfonat in einer Endkonzentration von 1 mM in 1 ml für 8 h vorinkubiert, dann in ein Röhrchen überführt und mit einem Gummiseptum gasdicht verschlossen. Nach 4 h wurde die gebildete Ethylenmenge gaschromatographisch bestimmt. Die Hemmwirkung einiger typischer Vertreter ist in Tab. I aufgeführt. Dabei bedeutet O: O - 5O % Hemmung, (+): 51 - 75 % Hemmung, (++):

76 - 85 % Hemmung, (+ + +): 86 - 100 % Hemmung).

Tabelle I

| Wirkstoff | Bonitur | Pflanzenverträglichkeit* |
|---|---|---|
| Wasser | 0 | + |
| Aminooxyessigsäure | ++ | - |
| 1 | +++ | + |
| 4 | ++ | + |
| 5 | +++ | + |
| 6 | +++ | + |
| 10 | ++ | + |
| 11 | +++ | + |
| 12 | + | + |
| 16 | +++ | + |
| 17 | +++ | + |
| 18 | ++ | + |

*Die Pflanzenverträglichkeit wurde mit 6 Wochen alten Sojapflanzen nach Besprühen mit Wirkstofflösung (3 mg/3 Pflanzen) ermittelt; dabei bedeutet +: gute und -: schlechte Verträglichkeit

2. Welketests bei Schnittblumen (Nelken)

Voll aufgeblühte Nelken wurden abgeschnitten und in 100 ml Wirkstofflösung eingestellt. Die Wirkstoffe wurden in Wasser, Aceton bzw. einer Mischung aus Cyclohexanon und gebräuchlichen Emulgatoren wie Ricinusölethoxylat oder Calciumdodecylbenzosulfonat gelöst. An dem Tag, an dem alle Blüten der Wasser-Kontrolle verwelkt waren, wurde eine Welkebonitur durchgeführt: (O) = O - 25 % frische Blüten, (+) = 26 - 50 % frische Blüten, (+ +) = 51 - 85 % frische Blüten, (+ + +) = 86 - 100 % frische Blüten. Die Ergebnisse zeigt Tabelle II.

Tabelle II

| Wirkstoff | Konzentration (mM) | Bonitur |
|---|---|---|
| Wasser | - | 0 |
| Aminooxyessigsäure | 0,5 | + |
| 1 | 0,5 | +++ |
| 16 | 0,3 | ++ |
| 17 | 0,3 | +++ |

Wie die Beispiele zeigen, sind die Wirkstoffe gemäß Anspruch in der Lage, die Ethylenproduktion im

Gewebe stark zu drosseln und bestimmte ethylenabhängige Prozesse in der Pflanze, wie zum Beispiel die Blütenwelke, zu hemmen. Die eingesetzten Wirkstoffe sind leichter zugänglich, wirksamer und/oder weniger toxisch als bekannte Standards, wie z.B. Aminooxyessigsäure oder die ebenfalls verwendeten Silbersalze.

## Ansprüche

1. Substituierte Oximether der Formeln

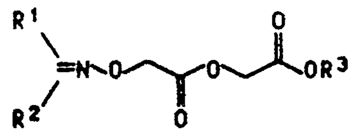

(Ia),

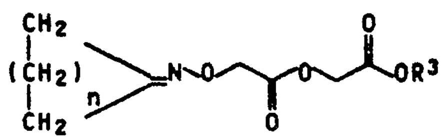

(Ib),

in welchen

$R^1$ und $R^2$ unabhängig voneinander für $C_1$ bis $C_6$ Alkyl stehen bzw. n die Zahl 2 oder 3 bedeutet und $R^3$ für Wasserstoff oder $C_1$ bis $C_6$-Alkyl steht.

2. Mittel, insbesondere zur Senkung des endogenen Ethylenspiegels in Pflanzen, enthaltend mindestens eine Verbindung der Formel Ia oder Ib gemäß Anspruch 1.

3. Verfahren zur Herstellung der Verbindungen des Anspruchs 1, dadurch gekennzeichnet, daß man eine entsprechende Carbonsäuren der Formel IIa bzw. IIb

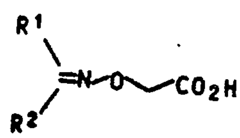

(IIa)

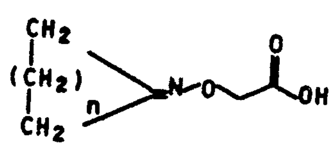

(IIb)

mit einem entsprechenden Carbonsäurederivat der Formel

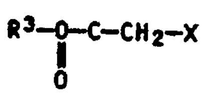

(III),

in der

$X^-$ eine Abgangsgruppe wie $I^-$, $Br^-$, $Cl^-$, Mesylat oder Tosylat bedeutet, zu einem Ester umsetzt.

4. Verfahren zur Beeinflussung des Pflanzenwachstums, dadurch gekennzeichnet, daß man mindestens

eine Verbindung gemäß Anspruch 1 bzw. ein Mittel gemäß Anspruch 2 auf Pflanzen oder deren Saatgut einwirken läßt.

5. Verfahren zur Herstellung eines Mittels gemäß Anspruch 2, dadurch gekennzeichnet, daß man substituierte Oximether gemäß Anspruch 1 mit festen oder flüssigen Trägerstoffen sowie gegebenenfalls mit einem oder mehreren oberflächenaktiven Mitteln mischt.

## Claims

1. A substituted oxime-ether of the formula

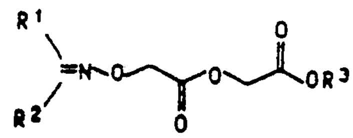

(Ia)

or

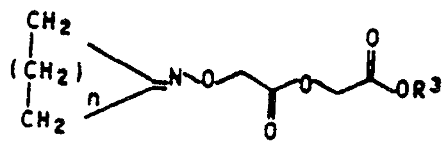

(Ib)

where $R^1$ and $R^2$ independently of one another are $C_1$-$C_6$-alkyl, n is 2 or 3 and $R^3$ is hydrogen or $C_1$-$C_6$-alkyl.

2. A composition, especially for lowering the endogenous ethylene level in plants, which contains one or more compounds of the formula Ia or Ib as claimed in claim 1.

3. A process for the preparation of a compound as claimed in claim 1, wherein a corresponding carboxylic acid of the formula IIa or IIb

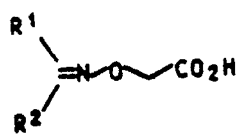

(IIa)

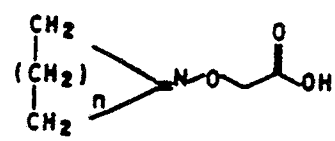

(IIb)

is reacted with a corresponding carboxylic acid derivative of the formula

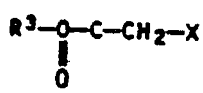

(III)

where $X^-$ is a leaving group, such as $I^-$, $Br^-$, $Cl^-$, mesylate or tosylate, to give an ester.

4. A method of controlling plant growth, wherein one or more compounds as claimed in claim 1 or a composition as claimed in claim 2 is allowed to act on plants or on their seed.

5. A process for the preparation of a composition as claimed in claim 2, wherein a substituted oxime-ether as claimed in claim 1 is mixed with solid or liquid carriers, with or without one or more surfactants.

**Revendications**

1. Ethers d'oximes substitués de formules

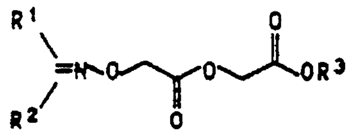

(Ia),

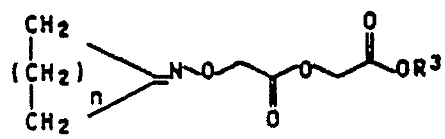

(Ib),

dans lesquelles
$R^1$ et $R^2$ représentent chacun, indépendamment l'un de l'autre, un groupe alkyle en C1-C6 et n est égal à 2 ou 3, et
$R^3$ représente l'hydrogène ou un groupe alkyle en C1-C6.

2. Produit, destiné en particulier à provoquer une diminution de la teneur en éthylène endogène dans les végétaux, contenant au moins un composé de formule Ia ou Ib de la revendication 1.

3. Procédé de préparation des composés de la revendication 1, caractérisé en ce que l'on convertit un acide carboxylique correspondant de formule IIa ou IIb

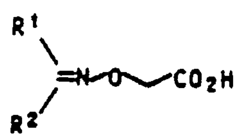

(IIa)

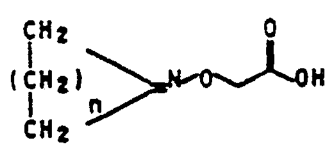

(IIb)

à l'aide d'un dérivé d'acide carboxylique correspondant de formule

$$R^3-O-\underset{\underset{O}{\|}}{C}-CH_2-X \qquad \text{(III)},$$

dans laquelle
$X^-$ représente un substituant éliminable tel que $I^-$, $Br^-$, $Cl^-$, un groupe mérylate (méthane-sulfonate) ou toluène-sulfonate (tosylate), en un ester.

4. Procédé pour agir sur la croissance des végétaux, caractérisé en ce que l'on fait agir sur les végétaux ou leurs semences au moins un composé selon la revendication 1 ou un produit selon la revendication 2.

5. Procédé de préparation d'un produit selon la revendication 2, caractérisé en ce que l'on mélange des éthers d'oximes substitués selon la revendication 1 avec des véhicules solides ou liquides et le cas échéant un ou plusieurs agents tensio-actifs.